# EUROPÄISCHE PATENTANMELDUNG

(11) **EP 0 724 085 A1**
(43) Veröffentlichungstag der Anmeldung: **31.07.1996**
(21) Anmeldenummer: 96101027.9
(22) Anmeldetag: 25.01.1996
(51) Int. Cl.: F16B 13/06

(54) **Formschlüssig setzbarer Hinterschnitt-Anker**

(30) Priorität: 28.01.1995 DE 19502729; 01.03.1995 DE 19507058
(71) Anmelder: Liebig, Heinrich, D-64319 Pfungstadt (DE)
(72) Erfinder: Liebig, Heinrich, D-64319 Pfungstadt (DE)
(74) Vertreter: Helber, Friedrich G., Dipl.-Ing.

(57) **Zusammenfassung**

Hinterschnitt-Anker (10) zum formschlüssigen Setzen in einer Befestigungsbohrung. Auf einem an seinem in Setzrichtung vorderen Ende eines langgestreckten Schafts (14) mit einem Spannkopf (24) versehenen Ankerbolzen (12) ist eine mehrfach geschlitzte und dadurch in eine Anzahl von aufschwenkbaren Verankerungsarmen (40) unterteilte Ankerhülse (16) aufgesetzt, welche bei Einleitung einer sie auf den Spannkopf (24) aufschiebenden Spannkraft am vorderen Ende aufgeschwenkt werden, wobei ihre schneiden- oder meißelartig ausgebildeten freien Enden in die Wandung der Befestigungsbohrung eindringen und so eine formschlüssige Festlegung in der Bohrung bewirken.

Die Spannkraft wird z.B. durch Aufdrehen einer Mutter (36) auf das mit Gewinde (30) versehene freie Ende des Schafts (14) des Ankerbolzens (12) erzeugt und über eine auf den Schaft geschobene Distanzhülse (18) auf die Ankerhülse (16) übertragen.

Im bohrungsinneren Endbereich des Spannkopfs (24) sind in Umfangsrichtung zueinander versetzt wenigstens drei radial vortretende zugeschärfte oder zugespitzte Vorsprünge (28) vorgesehen, die beim Einführen des Ankers die Bohrungswandung zumindest noch Anritzen und damit sicherstellen, daß sich der Hinterschnittanker beim Andrehen der Mutter in der Bohrung nicht mitdrehen kann.

## Beschreibung

Die Erfindung betrifft einen formschlüssig setzbaren Hinterschnitt-Anker mit einem Ankerbolzen, dessen langgestreckter, an seinem in Setzrichtung rückwärtigen Ende mit Gewinde versehener zylindrischer Schaft an seinem in Setzrichtung vorderen Ende einen sich kegelstumpfförmig erweiternden Spannkopf aufweist, auf dem eine von ihrem in Setzrichtung vorderen Ende her über einen Teil ihrer Länge geschlitzte und im geschlitzten Bereich eine Anzahl von Verankerungsarme bildende Ankerhülse verschieblich aufgesetzt ist, deren Innendurchmesser im wesentlichen dem Außendurchmesser des zylindrischen Schafts entspricht, und in deren Außenseite in einigem Abstand vom in Setzrichtung vorderen Ende eine umlaufende Nut eingebracht ist, welche die in Setzrichtung vorderen Endbereiche der Verankerungsarme relativ zu den anschließenden Bereichen unter Verformung des im Nutgrund verbleibenden Materials derart ausschwenkbar ausbildet, daß sie bei in die zugehörige Bohrung eingesetzten Zustand durch Einleitung einer die Ankerhülse relativ zum Ankerbolzen in Richtung auf das bohrungsinnere Ende des Spannkopfs verschiebenden Spannkraft aufgeweitet werden, wobei die in Setzrichtung vorderen Endbereiche der Verankerungsarme zusammengenommen die äußere Form von zwei mit ihren im Durchmesser kleineren Stirnflächen aneinanderliegenden Kegelstümpfen haben, deren am in Setzrichtung vorderen Ende einerseits und an der Nut andererseits gebildete Basisflächen im nicht aufgeSpannten Zustand jeweils einen dem Außendurchmesser der Ankerhülse im wesentlichen entsprechenden Durchmesser haben.

Es ist ein formschlüssig setzbarer Anker dieser Art bekannt (DE-PS 43 33 471), der sich in der Praxis bewährt hat. Zum formschlüssigen Setzen dieses Ankers wird der Anker insgesamt soweit in die zugehörige Bohrung im Untergrund eingeführt, daß die in Setzrichtung vordere Stirnfläche des Spannkopfs entweder auf dem Boden der Bohrung im Untergrund oder einer umlaufenden, mittels eines Bundbohrers erzeugten Ringschulter in der Bohrung abgestützt wird. Dann werden mittels einer über den zylindrischen Schaft des Ankerbolzens bis in Anlage an die spannkopfabgewandte Stirnfläche der Ankerhülse geführten Schlaghülse Schläge auf die Ankerhülse zur Einwirkung gebracht, welche die Ankerhülse auf den Spannkopf auftreiben, wobei die Verankerungsarme zunächst bis zur Anlage an der Bohrungswandung nach außen aufgeschwenkt werden, worauf die an den in Setzrichtung vorderen Stirnkanten der Verankerungsarme gebildeten Schneidkanten in die Wandung der Bohrung eindringen und so den Formschluß im Untergrund herstellen. Dieser bekannte, durch Schlag setzbare Anker setzt eine genaue Anpassung der Länge des Ankers an die Tiefe der Bohrung bzw. den Abstand der Ringschulter der gestuften Bohrung von der Oberfläche des Untergrunds voraus. Falls mit einer gestuften Bohrung mit Ringschulter gearbeitet wird, steigt auch der Aufwand für die Erstellung der Bohrung, da zunächst eine Vorbohrung geringeren Durchmessers mit einem normalen Schlagbohrwerkzeug eingebracht und dann diese mittels eines Bundbohrers bis in die vorgesehene Tiefe auf den Soll-Durchmesser aufgebohrt werden muß. Diese Art der Vorbereitung und Montage des Ankers ist arbeitsaufwendig und erfordert geschultes Personal. Geschultes Personal steht aber nicht immer zur Verfügung, so daß es dazu kommen kann, daß die an sich zum Setzen der bekannten Anker vorgesehenen Bohrungen bezüglich ihrer Tiefe bzw. der Tiefe des Bunds verbohrt werden und dann nicht mehr für die an sich vorgesehene Größe des Ankers verwendbar sind.

Der Erfindung liegt demgegenüber die Aufgabe zugrunde, einen grundsätzlich in gleicher Weise formschlüssig im Untergrund veränderbaren Hinterschnitt-Anker zu schaffen, welcher aber in beliebiger Tiefe in einer einfachen zylindrischen Bohrung mit vorgegebenen Soll-Durchmesser setzbar ist, ohne daß hierfür eine Schlageinwirkung zum Aufschwenken der Verankerungsarme der Verankerungshülse und somit eine Abstützung des Spannkopfs in der Bohrung erforderlich ist.

Ausgehend von einem Anker der eingangs erwähnten Art wird diese Aufgabe erfindungsgemäß dadurch gelöst, daß im bohrungsinneren Endbereich des sich kegelstumpfförmig erweiternden Spannkopfs in Umfangsrichtung zueinander versetzt wenigstens drei radial vortretende, in Richtung auf ihre freien Enden zugeschärfte oder zugespitzte Vorsprünge vorgesehen sind, deren freie Enden auf einem umschriebenen Kreis liegen, dessen Durchmesser etwas größer als der Soll-Durchmesser der Befestigungsbohrung im Untergrund ist, wobei der Überstand der Vorsprünge in Bezug auf den Bohrungs-Solldurchmesser so gewählt ist, daß die Spitzen der Vorsprünge bei an der oberen Toleranzgrenze liegendem Bohrungsdurchmesser die Bohrungswandung noch anritzen. Beim Einführen des Ankers in die zugehörige Befestigungsbohrung graben sich also die Spitzen der Vorsprünge zumindest geringfügig in die Bohrungswandung ein. Die hierfür erforderliche Kraft ist aber relativ gering, so daß der Anker in der Regel von Hand bis in die erforderliche Setztiefe geschoben werden kann. Selbst wenn der Durchmesser der Bohrung an der unteren Toleranzgrenze liegt, genügen leichte Schläge, z.B. mit einem Hammerstiel, um den Anker in die Bohrung einzuführen. Zum Ausschwenken der Verankerungsarme derart, daß sich die untere Schneidkante des in Setzrichtung vorderen Kegelstumpfs der Verankerungsarme in die Bohrungswandung eingräbt, muß dann eine Zugkraft auf das gegenüberliegende, bohrungsäußere Ende des zylindrischen Schafts ausgeübt werden, was z.B. durch Anziehen einer auf das Gewinde zum bohrungsäußeren rückwärtigen Ende des zylindrischen Schafts vormontierten Mutter möglich ist. Die bis zur Anlage an den Untergrund bzw. einen auf dem Untergrund zu befestigenden Bauteil geschobene Mutter stützt sich dann - zweckmäßig über eine Unterlegscheibe - ab. Beim Andrehen der Mutter mittels eines einfachen Drehwerkzeugs, z.B. eines Schraubenschlüssels, wird der zylindrische Schaft dann in Richtung auf das äußere Bohrungsende gezogen und der Spannkopf schwenkt die Verankerungsarme in der erforderlichen Weise bis zum Eindringen der an ihrem bohrungsinneren Enden gebildete Schneidkanten in die Bohrungswandung auf. Durch die am Spannkopf vorgesehenen zugespitzten Vorsprünge wird dabei ein Mitdrehen des Ankerbolzens mit Sicherheit vermieden.

In bevorzugter Ausgestaltung der Erfindung sind die zugespitzten Vorsprünge integral am Spannkopf angeformt.

Alternativ können die Vorsprünge auch an einem gesondert hergestellten und drehfest am in Setzrichtung vorderen Ende des Spannkopfs befestigten Bauelement, beispielsweise einem drehfest auf dem bohrungsinneren Ende des Spannkopfs gehalterten Metallring vorgesehen sein. Alternativ kann das gesondert hergestellte Bauelement auch aus einem geeigneten Kunststoff hergestellt sein.

Die Vorsprünge haben dabei in Blicktrichtung auf die Basisfläche des sich kegelstumpfförmig erweiterten Spannkopfs vorzugsweise dreieckige Form.

Die Ankerhülse kann in vorteilhafter Weiterbildung der Erfindung zumindest in ihrem in Setzrichtung vorderen Endbereich bis einschließlich der umlaufenden Nut derart einsatzgehärtet werden, daß das im Nutgrund verbleibende Material der Ankerhülse durchgehärtet ist. Bei der Einsatzhärtung eines kohlenstoffarmen zähen Stahls, wie er für Ankerhülsen verwendet wird, erstreckt sich die erzielte Härte nur in eine geringe Tiefe von der Oberfläche aus. Das Material der Ankerhülse wird dadurch nicht insgesamt versprödet, sondern lediglich die Beanspruchbarkeit ihrer Oberfläche und - insbesondere auch - die Standfestigkeit der beim Setzvorgang in die Bohrloch-Wandung eindringenden Schneidkante an den Verankerungsarmen erhöht. Die Durchhärtung im Nutgrund wird dagegen bewußt vorgenommen, wodurch das verbleibende Nutgrund-Material insgesamt versprödet und beim Setzvorgang durch das Ausschwenken der Verankerungsarme bricht, so daß sich der in Setzrichtung vor der Nut liegende Teil der Verankerungshülse von dieser abtrennt.

Wenn die Spannkraft für die Verankerungsarme in der oben geschilderten Weise durch Drehen einer auf das Gewinde am spannkopfabgewandten Ende des Ankerschafts aufgeschraubten Mutter erzeugt wird, die ihrerseits über eine Unterlegscheibe am Untergrund bzw. dem am Untergrund zu befestigenden Bauteil abgestützt ist und die Verankerungshülse direkt oder über eine Distanzhülse indirekt ebenfalls an der Unterlegscheibe abgestützt ist, ist es zweckmäßig, wenn die Unterlegscheibe im Bereich der Abstützung an der Ankerhülse in Richtung ins Bohrungsinnere vorstehende, durch Einwirkung einer hinreichend hohen Druckkraft in die Ebene der Unterlegscheibe zurückverformbare Ansätze aufweist. Diese zurückverformbaren Ansätze stellen einen zusätzlichen Nachspannweg für einen in Durchsteckmontage zu befestigenden Bauteil zur Verfügung, welcher dazu dienen kann, einen noch nicht stramm genug an die Unterlage gepreßten Bauteil zusätzlich festzuspannen, auch wenn ein weiteres Einziehen des Spannkopfs in die Ankerhülse und somit eine zusätzliche Ausschwenkung der Verankerungsarme nicht mehr möglich ist.

Anstelle einer Mutter mit Unterlegscheibe kann alternativ auch ein Spannen des Ankerbolzens durch Drehen eines auf das Gewinde am spannkopfabgewandten Ende des Ankerschafts aufgebrachten langgestreckten zylindrischen Bauelements erfolgen, welches am bohrungsabgewandten Ende ein sich auf dem Untergrund bzw. dem auf dem Untergrund zu befestigenden Bauteil abstützenden, mit einer Einrichtung zum Ansetzen eines Drehwerkzeugs versehenen Kopf aufweist. Dann kann der vorerwähnte Nachspannweg dadurch konstruktiv verwirklicht werden, daß zwischen der kopfabgewandten Stirnseite des langgestreckten zylindrischen Bauelements und der Ankerhülse ein bei Einwirkung einer hinreichend hohen Druckkraft zusammendrückbarer ringförmiger Bauteil vorgesehen wird. Die Verformbarkeit des Ringbauteils in Längsrichtung des Ankers kann entweder durch die Wahl eines geeignet verformbaren Materials oder durch eine entsprechende Formgebung des Ringbauteils verwirklicht werden.

Der am bohrungsäußeren Ende des langgestreckten zylindrischen Bauteils vorgesehene Kopf kann beispielsweise als an sich bekannter Sechskant-Schraubenkopf ausgebildet sein, an dem ein normaler Schraubenschlüssel ansetzbar ist.

Wenn der zu befestigende Bauteil mit einer angesenkten Befestigungsbohrung versehen ist, kann der am bohrungsabgewandten Ende des langgestreckten zylindrischen Bauelements vorgesehene Kopf dagegen auch als Senkkopf ausgebildet sein, in dessen Stirnfläche eine Werkzeug-Ansetzausnehmung zur Aufnahme eines Drehwerkzeugs nach Art eines Inbusschlüssels o.dgl. vorgesehen ist.

Insbesondere dann, wenn der erfindungsgemäße Hinterschnitt-Anker in Bohrungen in Beton-Bauteilen höherer Festigkeit gesetzt werden soll, kann es zweckmäßig sein, die Ausgestaltung so zu treffen, daß die am in Setzrichtung vorderen Ende der Verankerungsarme gebildeten Stirnflächen in nicht aufgeweitetem Zustand entsprechend den Teilflächen der Mantelfläche eines sich ins Bohrungsinnere verjüngenden Kegelstumpfs geformt sind.

Die Erfindung ist in der folgenden Beschreibung zweier Ausführungsbeispiele in Verbindung mit der Zeichnung näher erläutert und zwar zeigt:
- Fig. 1: eine perspektivische Explosionsdarstellung eines Ausführungseispiels eines erfindungsgemäßen Hinterschnitt-Ankers;
- Fig. 2: eine Ansicht auf die spannkopfseitige Stirnseite des Ankerbolzens des Hinterschnitt-Ankers, gesehen in Richtung des Pfeils 2 in Fig. 1;
- Fig. 3: eine Schnittansicht durch den in der erfindungsgemäßen Weise ausgebildeten Anker gemäß Fig. 1 in der zur Befestigung eines Bauteils in Durchsteckmontage in eine Befestigungsbohrung in einem Untergrund eingeführten Ausgangsstellung vor der formschlüssigen Festlegung des Ankers;
- Fig. 4: den bohrungsinneren Endabschnitt des in Fig. 3 gezeigten Ankers in der durch Anziehen der am äußeren Ende des Ankerbolzens vorgesehene Mutter erhaltenen Setzlage;
- Fig. 5: ein an Stelle einer Mutter mit Unterlegscheibe zum axialen Anziehen des Ankerbolzens verwendbares Dreh-Anzugselement in einer - teilweise aufgebrochenen - Seitenansicht;
- Fig. 6: ein gegenüber dem in Fig. 5 gezeigten Dreh-Auszugselement abgewandeltes Dreh-Anzugselement;
- Fig. 7: eine in der Schnittführung der Fig. 1 entsprechende Schnittansicht des bohrungsinneren, spannkopfseitigen Endes eines abgewandelten Ausführungsbeispiels eines erfindungsgemäßen Hinterschnitt-Ankers, bei welchem die am Anker vorgesehenen zugespitzen Vorsprünge an einem gesonderten, drehfest auf dem Spannkopf montierten Ring ausgebildet sind;
- Fig. 8: eine Ansicht auf die Stirnseite des Spannkopfs gesehen ihn Richtung des Pfeils 8 in Fig. 7;
- Fig. 9: eine Seitenansicht des spannkopfseitigen Endbereichs des Ankerbolzens des in Fig. 7 gezeigten Ausführungsbeispiels ohne den auf den Spannkopf montierten, die zugespitzten Vorsprünge tragenden Ring;
- Fig. 10: den auf dem Spannkopf gemäß Fig. 9 montierbaren gesondert hergestellten, mit den zugespitzten Vorsprüngen versehenen Ring in einer Seitenansicht; und
- Fig. 11: eine Ansicht gesehen in Richtung des Pfeils 11 in Fig. 10.

Das mit 10 bezeichnete Ausführungsbeispiel eines erfindungsgemäßen Hinterschnitt-Ankers setzt sich im wesentlichen aus drei Hauptteilen, nämlich einem langgestreckten Ankerbolzen 12 einerseits, einer längsverschieblich auf dem zylindrischen Schaft 14 des Ankerbolzens angeordneten Ankerhülse 16 andererseits und einer Distanzhülse 18 zusammen.

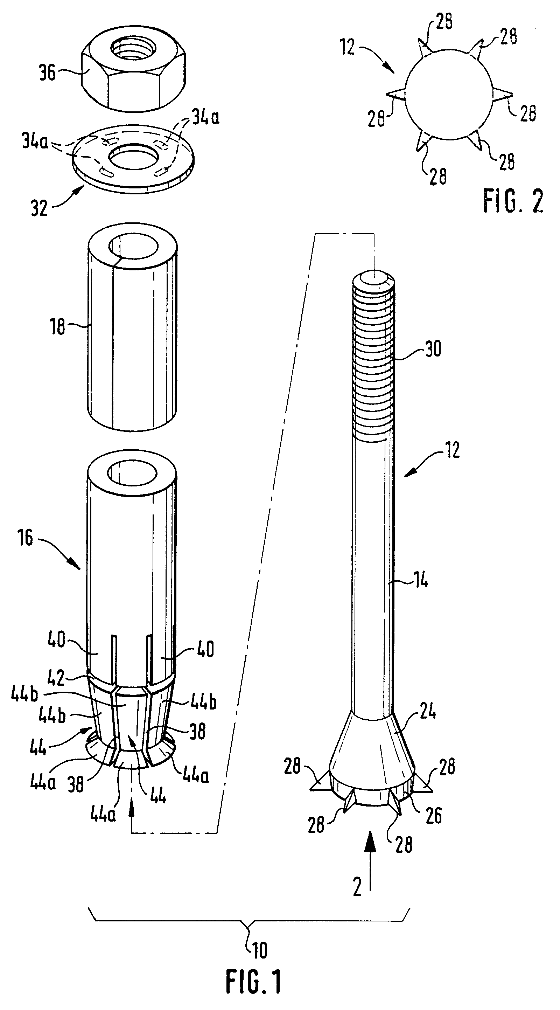

Der Ankerbolzen 12 weist an seinem, in Setzrichtung vorderen, d.h. beim Setzen in ein Bohrloch 20 in einem Untergrund 22 inneren Ende des Schafts 14 einen angestauchten kegelstumpfförmigen Spannkopf 24 auf, der sich also vom Schaft 14 des Ankerbolzens 12 aus konisch erweitert. Im Fall des Ankers 10 schließt an den eigentlichen kegelstumpfförmigen Spannkopf 24 noch ein kurzer zylindrischer Abschnitt 26 an, von welchem in gleichmäßigen Winkelabständen in Umfangsrichtung zueinander versetzt eine Anzahl von in Richtung auf ihre freien Enden zugeschärften Vorsprüngen 28 radial vortritt. In Blickrichtung auf die untere Stirnfläche des Spannkopfs 24 gesehen haben diese Vorsprünge die insbesondere in Figur 2 erkennbare dreieckige Form. Die Vorsprünge erstrecken sich in Längsrichtung des Ankers etwa über die Höhe des zylindrischen Abschnitts 26, wobei die von der Spitze des Dreiecks gebildete Schneidkante allerdings schräg zurückweicht. Die so gebildeten Spitzen der Vorsprünge stehen radial soweit über den zylindrischen Abschnitt 26 vor, daß sie auf einem umschriebenen Kreis liegen, dessen Durchmesser etwas größer als der Solldurchmesser der Befestigungsbohrung 20 im Untergrund 22 ist. Dabei ist der radiale Überstand der Vorsprünge 28 in bezug auf den Bohrungs-Solldurchmesser so gewählt, daß die Spitzen der Vorsprünge 28 die Wandung der Bohrung 20 beim Einführen des Ankers auch dann noch anritzen, wenn der Bohrungsdurchmesser an der oberen zulässigen Toleranzgrenze liegt. Bei engeren, noch innerhalb der zulässigen Toleranz liegenden Bohrungsdurchmessern der Befestigungsbohrung 20 dringen die Vorsprünge 28 dann beim Setzvorgang in stärkerem Maße in die Bohrungswandung ein.

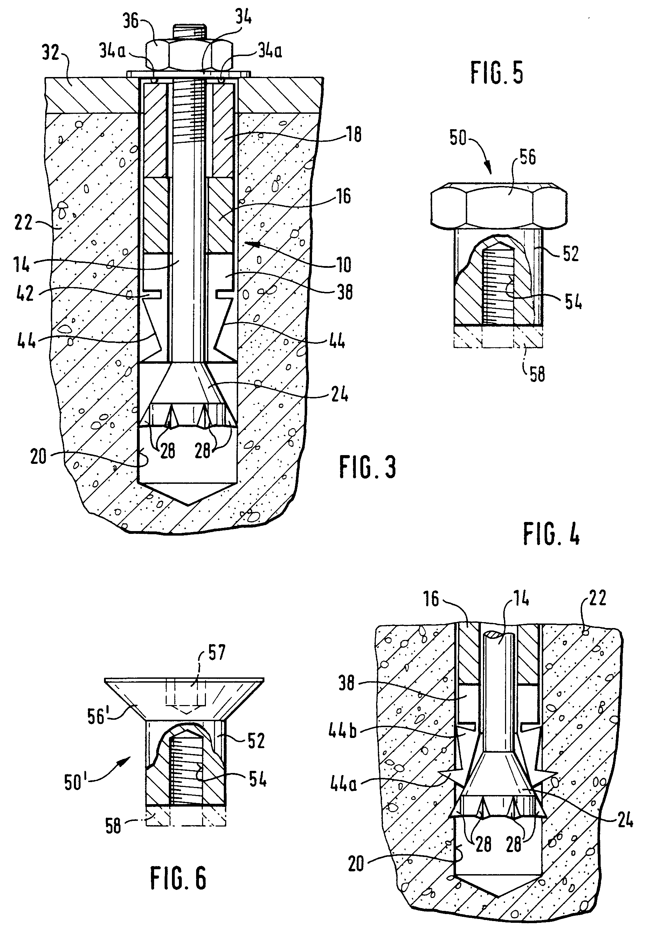

An seinem, dem Spannkopf 24 gegenüberliegenden Endbereich ist der Schaft 14 mit Gewinde 30 versehen, so daß die in Figur 3 veranschaulichte Befestigung eines Bauteils 32 auf dem Untergrund 22 mittels einer auf das Gewinde 30 des Schafts 14 zuvor im Bohrloch 20 gesetzten Ankers 10 aufgeschraubten und über eine Unterlegscheibe 34 auf dem Bauteil 32 und der bohrungsäußeren Stirnfläche der Distanzhülse 18 abgestützten Mutter 36 möglich ist.

Am in Setzrichtung vorderen Ende der Ankerhülse 16 sind durch - im Fall des dargestellten Ausführungsbeispiels sechs - von der bohrungsinneren Stirnfläche aus in gleichmäßigen Winkelabständen versetzt über einen Teil der Hülsenlänge eingearbeitete Längsschlitze 38 insgesamt sechs Verankerungsarme 40 ausgebildet, in deren Außenseite in einigem Abstand von dem in Setzrichtung vorderen Ende eine umlaufende Nut 42 eingestochen ist, welche die in Setzrichtung vorderen Endbereiche 44 der Verankerungsarme 40 relativ zu den entgegen der Setzrichtung anschließenden Bereiche unter Verformung des im Nutgrund verbleibenden Materials ausschwenkbar ausbildet. Dadurch ist es möglich, die bis zur Anlage an der vorderen Innenkante der Endbereiche 44 auf die Umfangsfläche des Spannkopfs 24 geschobene Ankerhülse 16 durch Einziehen des Spannkopfs 24 in die Ankerhülse aufzuspreizen und bei weiterem axialen Einziehen des Spannkopfs 24 durch Drehen der Mutter 36 die Endbereiche 44 entsprechend der Konizität des Spannkopfs soweit aufzuschwenken, daß ihre Schneidkanten ins Material der Wandung des Bohrlochs 20 einschneiden und in diesem Bereich dann einen Hinterschnitt im Bohrloch bilden.

In Figur 4 ist der durch das Einziehen des Spannkopfs 24 in die Ankerhülse 16 bewirkte gesetzte Zustand im Bohrloch 20 gezeigt. Da die Endbereiche 44 auf ein äußeres Durchmessermaß aufgeschwenkt sind, welches größer als der Bohrloch-Durchmesser ist, kann die Ankerhülse 16 und somit der Anker 10 insgesamt nur noch unter Zerstörung des Bohrlochs 20 aus diesem herausgezogen werden. In Auszugsrichtung wirkende Kräfte, beispielsweise die von der Mutter 36 beim Festspannen des Bauelements 32 auf dem Untergrund 22 im Schaft 14 des Ankerbolzens 12 wirkenden Kräfte versuchen, den Spannkopf 24 weiter in die Ankerhülse 16 einzuziehen, wodurch die Endbereiche 44 zusätzlich im Sinne einer radialen Aufweitung verschwenkt werden und die formschlüssige Verriegelung der Endbereiche 44 in der Wandung des Bohrlochs sozusagen in Abhängigkeit von der über den Ankerbolzen 12 eingeleiteten Anzugskraft bzw. einer vom befestigten Bauteil 32 auf den Ankerbolzen in Ausziehrichtung ausgeübten Belastung verstärkt wird.

Die durch die umlaufende Nut 42 am Vorderende der Verankerungsarme 40 ausgebildeten Endbereiche 44 haben zusammengenommen die in den Figuren 1, 3 und 4 erkennbare doppelkegelstumpfförmige Form, bei welcher zwei mit ihren im Durchmesser kleineren Stirnflächen aneinanderliegende Kegelstumpfflächen 44a, 44b eine Einschnürung bewirken. Die am in Setzrichtung vorderen Ende gelegene Basisfläche der Kegelstumpffläche 44a und die an der Nut 42 ausgebildete Basisfläche der Kegelstumpffläche 40b haben dabei jeweils einen dem Außendurchmesser der Ankerhülse 16 im wesentlichen entsprechenden Durchmesser. Dabei ist die Ausgestaltung der Kegelstumpfflächen 44a, 44b so getroffen, daß die in Setzrichtung vordere Kegelstumpffläche 44a einen größeren Kegelwinkel als die anschließende Kegelfläche 44b hat. Die zwischen der Kegelstumpffläche 44a und der bohrungsinneren Stirnfläche an den Verankerungsarmen 40 gebildete Kante wird deshalb zu einer spitzwinkligen, relativ leicht in die Bohrungswandung eindringenden Schneidkante.

Die Breite der bei diesem Ausführungsbeispiel im Querschnitt rechteckigen umlaufenden Nut 42 ist so gewählt, daß die in Setzrichtung gemessene Breite ihrer Mündung in der bestimmungsgemäßen Setzlage weitgehend oder fast geschlossen ist, wie dies in Figur 4 erkennbar ist. Bei weiterem Aufspreizen der Endbereiche 44 aufgrund zusätzlicher, über den Ankerbolzen 12 einwirkender Beanspruchung schließt sich dann die umlaufende Nut 42 vollständig und die Endbereiche 40 werden dann durch Anlage an der gegenüberliegenden seitlichen Begrenzungsfläche der Nut 42 an den Verankerungsarmen 40 abgestützt. Weiter erhöhte Belastungen versuchen dann also, die Verankerungsarme 40 insgesamt elastisch aufzuweiten.

In Figur 5 ist ein die im Zusammenhang mit dem in Figur 1 und 3 beschriebenen Hinterschnitt-Anker 10 verwendete Mutter 36 ersetzendes Dreh-Anzugselement 50 dargestellt, welches ein langgestrecktes zylindrisches Bauelement 52 aufweist, in dessen unterer Stirnfläche eine - im dargestellten Fall als Sackbohrung ausgebildete - Gewindebohrung 44 mündet, welche auf das Gewinde 30 des Schafts 14 des Ankerbolzens 12 aufschraubbar ist. Am gegenüberliegenden Ende des zylindrischen Bauteils ist ein Sechskant-Schraubenkopf 56 angestaucht, an welchem ein Schraubenschlüssel oder ein anderes geeignetes, von Hand oder maschinell betätigbares Drehwerkzeug angesetzt werden kann. Das zylindrische Bauelement 52 hat im wesentlichen den Durchmesser der beim Anker 10 gemäß Figur 1 vorgesehenen Distanzhülse 18 und kann so lang bemessen sein, daß es beim Setzen des Ankers 10 in Durchsteckmontage die Befestigungsbohrung im Bauelement 32 ganz durchsetzt und noch in das Bohrloch 20 im Untergrund eingreift. Eventuelle, parallel zu den aufeinanderliegenden Flächen des Bauelements 32 und des Untergrunds 22 einwirkende und so das Bauelement auf dem Untergrund zu verschieben suchende Belastungen, werden dann vom zylindrischen Bauelement 42 aufgenommen, welches dann also zusätzlich die Funktion einer, das Bauelement auf dem Untergrund ausrichtenden Scherbüchse hat.

Die Distanzhülse 18 ist bei Verwendung des Dreh-Anzugselements 50 entsprechend der Länge des zylindrischen Bauelements 52 verkürzt zu denken und kann - bei hinreichender Länge des Bauelements 52 - auch ganz entfallen.

An der unteren Stirnfläche des zylindrischen Bauelements 52 ist noch ein ringförmiger Bauteil 58 strichpunktiert angedeutet, der in Richtung der Längsmittelachse des Ankers 10 elastisch oder bleibend verformbar, d.h. zusammendrückbar ausgebildet sein möge, wobei der Verformungswiderstand so gewählt ist, daß eine merkliche Verformung des ringförmigen Bauteils im Sinne einer Zusammendrückung erst dann erfolgt, wenn die an den Verankerungsarmen ausgebildeten Schneidkanten bereits zumindest teilweise in die Wandung des Bohrlochs 20 eingedrungen sind, so daß der Anker 10 also bereits formschlüssig im Bohrloch 20 gehalten ist. Der verformbare ringförmige Bauteil 58 stellt somit im Rahmen seiner axialen Verformbarkeit einen zusätzlichen Anzugsweg zur Verfügung, mit dem ein nicht hinreichend fest auf dem Untergrund 22 angedrücktes oder ein durch Setzen gelockertes Bauelement 32 nachgespannt werden kann. Nur der Vollständigkeit halber sei erwähnt, daß ein solcher Nachlauf auch bei Verwendung der beim Hinterschnitt-Anker gemäß Figur 1 und 3 verwendeten Unterlegscheibe 34 realisierbar ist, indem nämlich in dem der bohrungsäußeren Stirnseite der Distanzhülse 18 gegenüberliegenden Bereich Ansätze 34a aus der Unterlegscheibe 34 herausgeprägt werden, die sich also auf der Stirnfläche der Distanzhülse 18 abstützen und sich beim Anspannen eines losen Bauelements 32 an den Untergrund 22 in die Ebene der Unterlegscheibe 34 zurückverformen können.

Figur 6 zeigt ein dem Dreh-Anzugselement 50 entsprechendes, für eine angesenkte Befestigungsbohrung im Bauelement 32 bestimmtes Dreh-Anzugselement 50', welches sich nur durch Ausbildung seines Kopfs 56' als kegelstumpfförmiger Senkkopf vom Dreh-Anzugselement 50 unterscheidet. Zum Anziehen des Dreh-Anzugselements ist dann eine in der nach außen gewandten Stirnfläche des Senkkopfs 56 mündende Werkzeug-Ansetzausnehmung 57 vorgesehen, in die beispielsweise ein Inbusschlüssel einführbar ist.

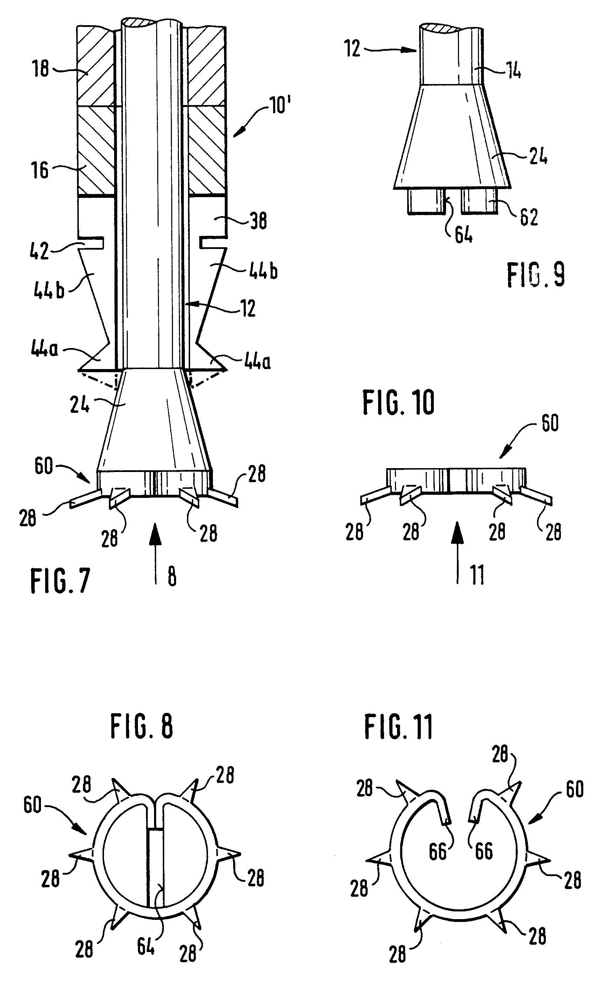

In Figur 7 ist ein zweites Ausführungsbeispiel eines erfindungsgemäßen Ankers 10' im Bereich seines gegenüber dem Anker 10 abgewandelten bohrungsinneren Endes dargestellt. Der Anker 10' unterscheidet sich vom zuvor beschriebenen Anker 10 nur dadurch, daß die zugespitzten Vorsprünge 28 nicht integraler Teil des Spannkopfs 24 sind, sondern an einem gesonderten ringförmigen Bauteil 60 (Fig. 10 und 11) angeformt sind, der seinerseits drehfest auf dem bohrungsinneren Ende des Spannkopfs 24 befestigt ist. Außerdem ist noch eine insbesondere für solche Anker vorteilhafte Abwandlung der Ausbildung der spannkopfzugewandten Stirnflächen der Verankerungsarme 14 strichpunktiert veranschaulicht, welche in Bohrungen in Beton höherer Festigkeit gesetzt werden sollen. In nicht aufgeweitetem Zustand haben diese Stirnflächen die Form von Teilflächen der Mantelfläche eines sich ins Richtung ins Bohrungsinnere verjüngenden Kegelstumpfs. Der Winkel der beim radialen Aufweiten der Verankerungsarme 40 in die Bohrungswandung eindringenden Schneidkanten wird dann im Vergleich zu einer ebenflächigen Stirnfläche größer. Dadurch erhöht sich die Beanspruchbarkeit der Schneidkanten merklich, ohne daß der Eindringwiderstand in die Bohrungswandung wesentlich ansteigt.

Bei diesem Ausführungsbeispiel ist der - in Figur 9 gesondert dargestellte - Spannkopf 24 an seinem bohrungsinneren Endbereich bei 62 im Durchmesser entsprechend dem Maß der Dicke des ringförmigen Bauteils 60 verringert und weist außerdem eine quer über die Stirnfläche verlaufende Nut 64 auf. Der ringförmige Bauteil 60 seinerseits ist kein geschlossener Ring, sondern an einer Seite geschlitzt, wobei im Bereich des Schlitzes kurze Endabschnitte 66 rechtwinklig nach innen gekantet sind. Zur Montage wird der in nicht montiertem Zustand in der in Figur 11 veranschaulichten Weise etwas aufgefederte Ring 60 derart zusammengedrückt, daß die Endabschnitte 66 aneinander anliegen. In dieser Form wird der ringförmige Bauteil dann auf den im Durchmesser verringerten Endabschnitt 62 des Spannkopfs 24 aufgeschoben, wobei die Endabschnitte 66 in die Nut 64 eingreifen und den Ring 60 somit gegen Verdrehung auf dem Endbereich 62 sichern. Diese montierte Stellung des ringförmigen Bauteils 60 ist in Figur 8 veranschaulicht.

Der beschriebene Ringbauteil 60 wird zweckmäßig im Stanz-Preßverfahren aus hinreichend starkem Metallblech hergestellt sein. Alternativ kommt auch eine Herstellung als Kunststoff-Spritzgußteil in Frage.

Es ist ersichtlich, daß im Rahmen des Erfindungsgedankens Abwandlungen und Weiterbildungen der beschriebenen Ausführungsbeispiele verwirklichbar sind, welche sich sowohl auf die Form der am Spannkopf vorgesehenen zugespitzten Vorsprünge 28 als auch deren integrale oder gesonderte Herstellung und nachträgliche Montage am Spannkopf 24 beziehen.

Aus der vorstehenden Beschreibung wird klar, daß beim Setzen des erfindungsgemäßen Hinterschnitt-Ankers 10 bzw. 10' genauso verfahren wird wie beim Setzen üblicher, nur kraftschlüssig in der zugehörigen Bohrung gehaltener Spreizdübel, so daß auch ungeschulte Personen ohne Schwierigkeiten mit der Anwendung der erfindungsgemäßen Anker betraut werden können. Gegenüber den normalen Spreizdübeln wird aber durch die formschlüssige Verankerung eine erhöhte Sicherheit erzielt und - da der beim Setzen auf die Wandung der Bohrung ausgeübte radiale Spanndruck deutlich geringer ist als die von Spreizdübeln auf Wandung ausgeübte Spreizkraft, können die erfindungsgemäßen Hinterschnitt-Anker auch ohne die Gefahr des Aufbrechens zum Rande hin in erheblich größerer Nähe des Randes eines Betonbauteils eingesetzt werden.

## Patentansprüche

1. Hinterschnitt-Anker (10;10') mit einem Ankerbolzen (12), dessen langgestreckter, an seinem in Setzrichtung rückwärtigen Ende mit Gewinde (30) versehener zylindrischer Schaft (14) an seinem in Setzrichtung vorderen Ende einen sich kegelstumpfförmig erweiternden Spannkopf (24) aufweist, auf dem eine von ihrem in Setzrichtung vorderen Ende her über einen Teil ihrer Länge mehrfach geschlitzte und im geschlitzten Bereich eine Anzahl von Verankerungsarmen (40) bildende Ankerhülse verschieblich aufgesetzt ist, deren Innendurchmesser im wesentlichen dem Außendurchmesser des zylindrischen Schafts (14) entspricht, und in deren Außenseite in einigem Abstand vom in Setzrichtung vorderen Ende eine umlaufende Nut (42) eingebracht ist, welche die in Setzrichtung vorderen Endbereiche (44) der Verankerungsarme (40) relativ zu den anschließenden Bereichen unter Verformung des im Nutgrund verbleibenden Materials derart ausschwenkbar ausbildet, daß sie bei in die zugehörige Bohrung (20) eingesetztem Zustand durch Einleitung einer die Ankerhülse (16) relativ zum Ankerbolzen (12) in Richtung auf das bohrungsinnere Ende des Spannkopfs (24) verschiebenden Spannkraft aufgeschwenkt werden, wobei die in Setzrichtung vorderen Endbereiche (44) der Verankerungsarme (40) zusammengenommen die äußere Form von zwei mit ihren im Durchmesser kleineren Stirnflächen aneinanderliegenden Kegelstümpfen (44a; 44b) haben, deren am in Setzrichtung vorderen Ende einerseits und an der Nut (42) andererseits gebildete Basisflächen im nicht aufgespreizten Zustand jeweils einen dem Außendurchmesser der Ankerhülse (16) im wesentlichen entsprechenden Durchmesser haben,
**dadurch gekennzeichnet,**
daß im bohrungsinneren Endbereich des sich kegelstumpfförmig erweiternden Spannkopfs (24) in Umfangsrichtung zueinander versetzt wenigstens drei radial vortretende in Richtung auf ihre freien Enden zugeschärfte oder zugespitze Vorsprünge (28) vorgesehen sind, deren freie Enden auf einem umschriebenen Kreis liegen, dessen Durchmesser etwas größer als der Solldurchmesser der Befestigungsbohrung (20) im Untergrund (22) ist, wobei der Überstand der Vorsprünge (28) in bezug auf den Bohrungs-Solldurchmesser so gewählt ist, daß die Spitzen der Vorsprünge (28) bei an der oberen Toleranzgrenze liegenden Bohrungsdurchmesser die Bohrungswandung noch anritzen.

2. Hinterschnitt-Anker nach Anspruch 1, dadurch gekennzeichnet, daß die Vorsprünge (28) integral am Spannkopf (24) angeformt sind.

3. Hinterschnitt-Anker nach Anspruch 1, dadurch gekennzeichnet, daß die Vorsprünge (28) an einem gesondert hergestellten und drehfest am in Setzrichtung vorderen Ende des Spannkopfs (24) befestigten Bauelelement (50) vorgesehen sind.

4. Hinterschnitt-Anker nach einem der Ansprüche 1 bis 3, dadurch gekennzeichnet, daß die Vorsprünge (28) in Blickrichtung auf die Basisfläche des sich kegelstumpfförmig erweiterten Spannkopfs (24) dreieckige Form haben.

5. Hinterschnitt-Anker nach einem der Ansprüche 1 bis 4, bei dem die Spreizkraft durch Drehen einer auf das Gewinde (30) am spannkopfabgewandten Ende des Ankerschafts (14) aufgeschraubten Mutter (36) erzeugt wird, die ihrerseits über eine Unterlegscheibe (34) am Untergrund (22) bzw. dem am Untergrund zu befestigenden Bauteil (32) und die Verankerungshülse (16) direkt oder über eine Distanzhülse (18) indirekt ebenfalls an der Unterseite der Unterlegscheibe (34) abgestützt ist, dadurch gekennzeichnet, daß die Unterlegscheibe (34) im Bereich der Abstützung an der Ankerhülse (16) in Richtung ins Bohrungsinnere vorstehende, durch Einwirkung einer hinreichend hohen Druckkraft in die Ebene der Unterlegscheibe (34) zurückverformbare Ansätze (34a) aufweist.

6. Hinterschnitt-Anker nach einem der Ansprüche 1 bis 4, bei dem die Spannkraft durch Drehen eines auf das Gewinde (30) am spannkopfabgewandten Ende des Ankerschafts (14) aufgebrachten langgestreckten zylindrischen Bauelements (52)erfolgt, welches am bohrungsabgewandten Ende einen sich auf dem Untergrund (22) bzw. dem auf dem Untergrund zu befestigenden Bauteil (32) abstützenden, mit einer Einrichtung zum Ansetzen eines Drehwerkzeugs versehenen Kopf aufweist, dadurch gekennzeichnet, daß zwischen der kopfabgewandten Stirnseite des langgestreckten zylindrischen Bauelements (52) und der Ankerhülse (16) ein bei Einwirkung einer hinreichend hohen Druckkraft zusammendrückbarer ringförmiger Bauteil (58) vorgesehen ist.

7. Hinterschnitt-Anker nach Anspruch 6, dadurch gekennzeichnet, daß der am bohrungsäußeren Ende des langgestreckten zylindrischen Bauelements (52) vorgesehene Kopf als Sechskant-Schraubenkopf (56) ausgebildet ist.

8. Hinterschnitt-Anker nach Anspruch 6, dadurch gekennzeichnet, daß der am bohrungsabgewandten Ende des langgestreckten zylindrischen Bauelements vorgesehene Kopf als Senkkopf (56') ausgebildet ist, in dessen Stirnfläche eine Werkzeug-Ansetzausnehmung (57) zur Aufnahme eines Drehwerkzeugs nach Art eines Inbusschlüssels o.dgl. vorgesehen ist.

9. Hinterschnitt-Anker nach einem der Ansprüche 1 bis 8, dadurch gekennzeichnet, daß die am in Setzrichtung vorderen Ende der Verankerungsarme (40) gebildeten Stirnflächen in nicht aufgeweitetem Zustand entsprechend den Teilflächen der Mantelfläche eines sich ins Bohrungsinnere verjüngenden Kegelstumpfs geformt sind.

10. Hinterschnitt-Anker nach einem der Ansprüche 1 bis 9, dadurch gekennzeichnet, daß die Ankerhülse (16) zumindest an ihrem in Setzrichtung vorderen Endbereich bis einschließlich der umlaufenden Nut (42) derart einsatzgehärtet ist, daß das im Nutgrund verbleibende Material der Ankerhülse (16) durchgehärtet ist.
